# FASCICULE DE BREVET EUROPEEN

(11) **EP 3 275 064 B1**
(45) Date de publication et mention de la délivrance du brevet: **21.11.2018**
(21) Numéro de dépôt: 16718399.5
(22) Date de dépôt: 22.03.2016
(51) Int. Cl.: H02H 1/00, H02H 3/06, H02H 7/22

(54) **PROCEDE ET DISPOSITIF DE PROTECTION D'UN RESEAU ELECTRIQUE**
VERFAHREN UND VORRICHTUNG ZUM SCHUTZ EINES STROMNETZES
METHOD AND DEVICE FOR PROTECTING A POWER GRID

(30) Priorité: 25.03.2015 FR 1552475
(43) Date de publication de la demande: 31.01.2018
(73) Titulaire: Safran Electrical & Power, 31702 Blagnac Cedex (FR)
(72) Inventeur: BENHAMZA, Gilles, 31000 Toulouse (FR); GENOULAZ, Jérôme, 31840 Seilh (FR); LEBRETON, Thibaud, 31490 Leguevin (FR)
(74) Mandataire: Cabinet Camus Lebkiri
(86) Numéro de dépôt international: PCT/FR2016/050633
(87) Numéro de publication internationale: WO 2016/151239

(56) Documents cités:
- EP-A2- 2 383 855
- US-A1- 2009 161 272
- US-A1- 2010 073 830
- US-A1- 2010 073 831
- US-A1- 2010 321 838

## Description

### DOMAINE TECHNIQUE DE L'INVENTION

Le domaine technique de l'invention est celui des réseaux électriques, et plus particulièrement celui de la détection des défauts d'arc survenant dans les réseaux électriques.

L'invention se rapporte ainsi à un procédé et un dispositif de protection d'un réseau électrique par détection de défauts d'arcs.

### ARRIERE-PLAN TECHNOLOGIQUE DE L'INVENTION

Un réseau électrique permet d'acheminer l'énergie électrique vers différentes charges électriques et peut être sujet à des arcs électriques, également appelés défauts d'arc, dont les causes les plus fréquentes sont l'ouverture et la fermeture de contacts, le sectionnement de câbles, la perte d'isolation par frottement ou vieillissement, la surchauffe de câbles, et les vibrations impliquant des pertes de connexion.

Les défauts d'arc peuvent notamment provoquer des dommages au sein du réseau électrique ou déclencher des incendies. Les moyens de protection conventionnels (e.g. des disjoncteurs thermiques) ne protègent pas systématiquement le réseau contre les défauts d'arc et les moyens de détection d'arc actuels ne sont pas suffisamment fiables pour être mis en oeuvre dans des domaines aux contraintes exigeantes, comme l'aéronautique.

En effet, de tels moyens de protection présentent un taux élevé de fausses alarmes. Par conséquent, leur intégration, notamment dans les architectures aéronautiques, aboutirait en fin de chaîne à des systèmes moins sûrs dans leur ensemble en raison des disjonctions intempestives, et donc des dégradations opérationnelles qu'elles induiraient.

Actuellement, la conception des réseaux électriques des avions est régie par des normes d'installation, édictant par exemple des règles sur l'isolation et sur la circulation des câbles électriques, qui visent à prévenir la formation des défauts d'arc. Ces normes d'installation ont malheureusement des limites et des départs d'incendie électriques restent possibles dans les avions.

Jusqu'à très récemment, la détection des défauts d'arc n'était donc pas prise en compte dans les spécifications relatives aux équipements électriques de l'aéronautique, ce qui était dû aux faibles niveaux de tension utilisés (115V AC et 28V DC).

Toutefois, dans les avions récents, de nombreux dispositifs préalablement hydrauliques, mécaniques ou pneumatiques sont remplacés par des dispositifs électriques, ce qui implique une augmentation des charges électriques, et conduit à une augmentation de la puissance embarquée. Cette exigence se traduit par une augmentation des niveaux de tension qui peuvent désormais atteindre 230V en alternatif, et +/-270V en continu.

Ainsi, cette augmentation combinée aux contraintes imposées par l'environnement aérien : baisse de pression liée à l'altitude, cycles de température et variation du taux d'humidité, risque de rendre l'existence des défauts d'arc inévitable. La détection des défauts d'arc, de manière fiable, devient donc un enjeu primordial.

Le document WO 2014/001466 décrit un dispositif et un procédé de surveillance d'un réseau électrique. Toutefois, le dispositif et le procédé décrits dans ce document ne permettent pas de minimiser les dommages subis par le réseau électrique et les risques d'incendies.

Il est aussi connu de l'état de la technique le document US2010/321838 A1.

### RESUME DE L'INVENTION

L'invention est défini par les revendications indépendantes 1 et 7. La présente invention vise à résoudre les problèmes qui viennent d'être exposés en proposant un procédé de détermination des défauts électriques qui soit fiable sans toutefois interrompre de manière intempestive et inutile le fonctionnement des équipements électriques alimentés par un réseau électrique. Dans l'invention, on propose une solution pour détecter de manière fiable un défaut électrique survenant dans un réseau électrique et protéger rapidement le réseau électrique, son environnement, les équipements et les personnes.

Pour ce faire, un premier aspect de l'invention concerne un procédé de protection d'un réseau électrique contre un défaut électrique, le défaut électrique générant un premier type de signal et un deuxième type de signal différent du premier type de signal, le réseau électrique comportant une alimentation électrique et un équipement électrique entre lesquels est disposé un contacteur, le contacteur pouvant être placé dans deux états :
- un état ouvert, pour lequel l'alimentation électrique n'est pas connectée électriquement à l'équipement électrique ;
- un état fermé, pour lequel l'alimentation électrique est connectée électriquement à l'équipement électrique ;
le procédé comportant les étapes suivantes :
- détecter un signal du premier type;
- placer le contacteur dans l'état ouvert ;
- vérifier, au cours d'une durée prédéterminée appelée « temps d'ouverture décidé », si un signal du deuxième type apparaît ;
- si un signal du deuxième type apparaît pendant le temps d'ouverture décidé, maintenir le contacteur dans l'état ouvert ;
- si aucun signal du deuxième type n'apparaît au cours du temps d'ouverture décidé, placer le contacteur dans l'état fermé.

Le procédé selon le premier aspect de l'invention s'applique tout particulièrement dans le cas où le défaut électrique est un défaut d'arc. On entend par « défaut d'arc » un courant électrique visible se formant entre au moins deux conducteurs et se propageant dans un milieu isolant, par exemple l'air. Un défaut d'arc génère divers phénomènes physiques, dont notamment un signal électrique, une onde acoustique, une perturbation électromagnétique et une onde lumineuse.

Le procédé selon l'invention permet de couper le courant électrique dans le réseau électrique dès la détection d'un signal du premier type caractéristique d'un défaut électrique. Le courant électrique est ensuite maintenu coupé ou rétabli en fonction de la confirmation ou non de l'apparition du défaut électrique dans le réseau électrique. La confirmation provient de la détection d'un signal du deuxième type caractéristique du défaut électrique.

Le procédé selon le premier aspect de l'invention peut également comporter une ou plusieurs caractéristiques parmi les suivantes considérées individuellement ou selon toutes les combinaisons techniquement possibles :
- le réseau électrique comporte en outre des moyens de détection d'un signal du deuxième type, le temps d'ouverture décidé étant supérieur au temps nécessaire à un signal du deuxième type pour se propager jusqu'aux moyens de détection d'un signal du deuxième type. Ainsi un signal du deuxième type peut être détecté quel que soit l'endroit du réseau électrique où il se produit ;
- un signal du deuxième type se propage dans le réseau électrique que le contacteur se trouve dans l'état ouvert ou dans l'état fermé, c'est-à-dire indépendamment de l'état d'alimentation du réseau électrique ;
- le temps d'ouverture décidé est inférieur au temps de transparence de l'équipement électrique. Ainsi, en cas de fausse alarme, l'équipement électrique ne cesse jamais de fonctionner ;
- le procédé comporte en outre une étape de corrélation temporelle entre l'instant où le contacteur est placé à l'état ouvert et l'instant où un signal du deuxième type est détecté, ce qui permet de discriminer un défaut électrique provoqué par l'ouverture du contacteur d'un défaut électrique qui s'est produit dans le réseau électrique ;
- les signaux du premier type de signal sont des signaux électriques ;
- les signaux du deuxième type de signal sont des signaux acoustiques.

On entend par « temps de transparence » le temps pendant lequel un équipement électrique continue de fonctionner alors qu'il n'est plus connecté à l'alimentation électrique. Pour ce faire, des condensateurs peuvent par exemple être montés dans l'équipement électrique. Les condensateurs stockent de l'énergie électrique lorsque l'alimentation électrique est connectée à l'équipement électrique puis qui la restitue lorsque l'alimentation électrique n'est plus connectée à l'équipement électrique.

Par exemple, les temps de transparence des équipements destinés à l'aéronautique sont de 200ms pour les équipements fonctionnant en courant alternatif, de 200ms pour les équipements dits de « Category A » fonctionnant en courant continu, et de 50ms pour les équipements dits de « Category B » fonctionnant en courant continu.

Ces temps de transparence sont définis dans la section 16 du document DO160 qui est un référentiel normatif pour l'aéronautique civile. Le document DO160 définit des procédures et des environnements de test pour les équipements destinés à l'aéronautique.

Un deuxième aspect de l'invention concerne un dispositif de protection d'un réseau électrique contre un défaut électrique, le défaut électrique générant un premier type de signal et un deuxième type de signal différent du premier type de signal, le réseau électrique comportant une alimentation électrique et un équipement électrique, le dispositif comportant :
- un premier détecteur apte à détecter un signal du premier type ;
- un deuxième détecteur apte à détecter si un signal du deuxième type apparait pendant une durée prédéterminée appelée « temps d'ouverture décidé » ;
- un contacteur pouvant être placé dans deux états, un état ouvert pour lequel l'alimentation électrique n'est pas connectée électriquement à l'équipement électrique, et un état fermé pour lequel l'alimentation électrique est connectée électriquement à l'équipement électrique ;
- des moyens de pilotage agencés pour piloter le contacteur, les moyens de pilotage étant agencés pour :
   ∘ placer le contacteur dans l'état ouvert si le premier détecteur détecte un signal d'un premier type ;
   ∘ maintenir le contacteur dans l'état ouvert si le deuxième détecteur détecte un signal du deuxième type pendant le temps d'ouverture décidé;
   ∘ placer le contacteur dans l'état fermé si aucun signal du deuxième type n'est détecté par le deuxième détecteur pendant le temps d'ouverture décidé.

Le dispositif selon le deuxième aspect de l'invention peut également présenter une ou plusieurs des caractéristiques ci-après prises individuellement ou selon toutes les combinaisons techniquement possibles.

De préférence, le contacteur bascule de l'état fermé à l'état ouvert sans générer de défaut électrique de nature à provoquer l'apparition d'un signal du deuxième type. En effet, si un défaut électrique provoquant l'apparition d'un signal du deuxième type était généré lors du basculement de l'état fermé à l'état ouvert, ce défaut électrique pourrait alors être détecté par le deuxième détecteur, de sorte que la première détection serait confirmée quand bien même le seul défaut électrique présent dans le réseau électrique a été créé par le basculement du contacteur.

Le contacteur est par exemple un contacteur statique à semi-conducteurs, également appelé contacteur SSPC pour « Solid-State Power Contactor » en anglais. Le contacteur SSPC est pilotable électriquement et ne génère pas de défaut électrique, ni en ouverture, ni en fermeture.

Un troisième aspect de l'invention concerne un réseau électrique comportant un dispositif de protection selon le deuxième aspect de l'invention.

### BREVE DESCRIPTION DES FIGURES

L'invention et ses différentes applications seront mieux comprises à la lecture de la description qui suit et à l'examen des figures qui l'accompagnent parmi lesquelles :
- la figure 1 représente schématiquement un réseau électrique équipé d'un dispositif de protection, selon un mode de réalisation de l'invention
- la figure 2 représente un diagramme fonctionnel d'un procédé de protection d'un réseau électrique, selon un mode de mise oeuvre de l'invention ;
- la figure 3 est un chronogramme représentant l'état d'un contacteur du dispositif de protection de la figure 1, dans un premier exemple de mise en oeuvre d'un mode de réalisation préférentiel de l'invention ;
- la figure 4 est un chronogramme représentant l'état d'un contacteur du dispositif de protection de la figure 1, dans un deuxième exemple de mise en oeuvre d'un mode de réalisation préférentiel de l'invention.

Les figures ne sont présentées qu'à titre indicatif et nullement limitatives de l'invention.

Pour plus de clarté, les éléments identiques ou similaires sont repérés par des signes de référence identiques sur toutes les figures.

### DESCRIPTION DETAILLEE D'UN MODE DE REALISATION DE L'INVENTION

L'invention a notamment pour objet de proposer un procédé et un dispositif destinés à détecter de manière fiable l'apparition d'un défaut électrique dans un réseau électrique tout en coupant le courant électrique dans le réseau électrique dès qu'un défaut électrique est susceptible de s'être formé. L'invention s'applique tout particulièrement dans le cas où le défaut électrique est un défaut d'arc.

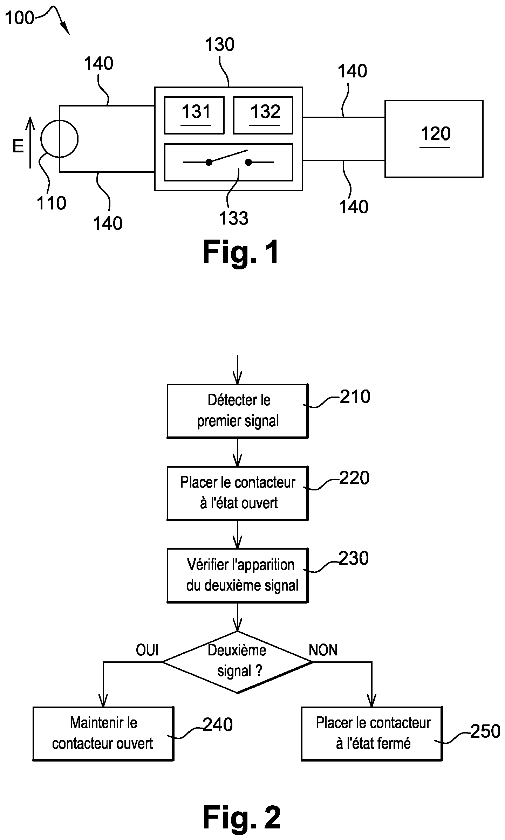

Les figures 1 et 2 sont décrites conjointement.

La figure 1 représente schématiquement un réseau électrique 100 comportant une alimentation électrique 110, délivrant une tension d'alimentation E, et un équipement électrique 120. Le réseau électrique 100 comporte également un dispositif de protection 130, selon un mode de réalisation de l'invention, relié à l'alimentation électrique 110 et à l'équipement électrique 120 par un câblage électrique 140.

On entend par « câblage électrique » les câbles électriques mais aussi les éléments de retour de courant, par exemple la carcasse d'un avion de construction classique à base d'aluminium, ou le réseau de retour de courant sur un avion construit sur la base de matériaux composites.

Un défaut électrique peut survenir dans le réseau électrique 100, ce qui se traduit par l'apparition d'un premier type de signal et d'un deuxième type de signal différent du premier type de signal. Par conséquent, un signal du premier type et un signal du deuxième type ont des vitesses de propagations différentes, le signal du premier type se propageant plus rapidement que le signal du deuxième type.

Selon un mode de réalisation, le signal du premier type peut par exemple être un signal électrique. Un tel signal électrique peut par exemple présenter une vitesse de propagation dans le cuivre de 2,73.10⁸ m/s. Selon un autre mode de réalisation, le premier signal pourrait par exemple être un signal optique. Un tel signal optique peut par exemple avoir une vitesse de propagation dans l'air est de de 3.10⁸ m/s.

Le signal du deuxième type peut par exemple être un signal acoustique. Un tel signal acoustique peut se propager dans le réseau électrique 100 que celui-ci soit ou non alimenté. Un signal acoustique a par exemple une vitesse de propagation dans le cuivre de 3350 m/s.

Le dispositif de protection 130 comporte un premier détecteur 131 apte à détecter le signal et un deuxième détecteur 132 apte à détecter le deuxième signal. Le dispositif de protection 130 comporte également un contacteur 133 disposé entre l'alimentation électrique 110 et l'équipement 120.

Le contacteur 133 est pilotable et peut être placé dans deux états, un état ouvert et un état fermé. Lorsque le contacteur est à l'état ouvert, l'alimentation électrique 110 n'est pas connectée électriquement à l'équipement électrique 120, qui est alors hors tension. Lorsque le contacteur est à l'état fermé, l'alimentation électrique 110 est connectée électriquement à l'équipement électrique 120, qui est alors sous tension.

Les différentes étapes relatives à un procédé de protection du réseau électrique 100 selon l'invention sont par exemple les suivantes, illustrées sur le diagramme fonctionnel de la figure 2.

Au cours d'une étape 210, un signal du premier type révélateur d'un défaut électrique est détecté par le premier détecteur 131. Le contacteur 133 est alors placé, au cours d'une étape 220, à l'état ouvert afin de protéger le réseau électrique contre des dommages et d'éviter un départ d'incendie.

Le signal du premier type est de préférence un signal ayant une vitesse de propagation élevée, comme un signal électrique ou un signal optique, et arrive presque instantanément au premier détecteur 131. Le temps nécessaire pour couper le courant électrique est alors équivalent au temps de traitement du signal du premier type par le premier détecteur 131 additionné au temps de réponse du contacteur 133, soit quelques millisecondes. Le réseau électrique 100 est ainsi protégé très rapidement.

Ainsi, le fait de pouvoir couper le courant électrique en quelques millisecondes permet de répondre aux exigences des normes les plus contraignantes. Par exemple la norme AS 5692, destinée à l'aéronautique, impose de pouvoir couper le courant électrique en moins de 8 demi-alternances, soit moins de 10ms pour le 115V classique fonctionnant à une fréquence fixe de 400HZ, et moins de 5ms pour le 115V AC et le 230V AC de nouvelle génération fonctionnant à une fréquence variable pouvant atteindre 800HZ.

Après avoir ouvert le contacteur 133 et interrompu le courant électrique dans le réseau électrique 100, il s'agit de confirmer qu'un défaut électrique s'est effectivement produit. En effet, le signal du premier type détecté peut avoir une autre origine qu'un défaut électrique. Dans le cas par exemple où le signal du premier type détecté est un signal électrique, ce dernier peut être provoqué par une charge normale appartenant au réseau électrique 100 qui peut avoir, dans certains modes de fonctionnement, une signature similaire à celle d'un signal électrique provoqué par un défaut électrique.

On procède donc à une étape de vérification 230 de l'apparition d'un signal du deuxième type caractéristique du défaut électrique au moyen du deuxième détecteur 132. Le signal du deuxième type est tolérant vis-à-vis d'une coupure du courant électrique dans le réseau électrique 100, c'est-à-dire qu'il se propage même lorsque le contacteur 133 est ouvert et le courant électrique est interrompu.

Dans un premier mode de réalisation, le contacteur 133 bascule de l'état fermé à l'état ouvert sans générer de défaut électrique, de façon à ne pas produire un signal du deuxième type caractéristique d'un défaut électrique et à ne pas déclencher la détection du signal du deuxième type. Un cas de fausse alarme serait alors considéré comme un vrai défaut électrique. Pour cela, le contacteur peut donc être par exemple un contacteur de type SSPC.

Dans un autre mode de réalisation, le contacteur 133 peut être un contacteur mécanique conventionnel. Le contacteur mécanique conventionnel peut générer un défaut électrique, appelé « défaut parasite », lorsqu'il bascule d'un état à l'autre. Dans ce mode de réalisation, le procédé de protection du réseau électrique 100 comporte en outre une étape de corrélation entre le moment où le contacteur 133 est ouvert et le moment où le signal du deuxième type produit par le défaut électrique est détecté. Ce temps combiné à la vitesse de propagation du signal du deuxième type permet de discriminer un défaut parasite du défaut électrique que l'on surveille.

L'étape de vérification 230 est effectuée pendant une durée prédéterminée appelée « temps d'ouverture décidé ». Le deuxième détecteur 132 est avantageusement disposé de sorte que le temps d'ouverture décidé soit supérieur au temps nécessaire au deuxième signal pour se propager jusqu'au deuxième détecteur 132, quel que soit l'endroit du réseau électrique 100 où le défaut électrique survient.

En considérant par exemple un cas pour lequel la distance la plus éloignée du deuxième détecteur 132 est de 50m, et que le deuxième signal soit un signal acoustique se propageant à 3350 m/s, le temps d'ouverture décidé est supérieur à 15ms.

Deux cas sont alors possibles. Si un signal du deuxième type apparaît pendant le temps d'ouverture décidé, le défaut électrique est avéré et le contacteur 133 est alors maintenu, au cours d'une étape 240, à l'état ouvert.

Dans le cas contraire, si aucun signal du deuxième n'apparaît pendant le temps d'ouverture décidé, le défaut électrique n'est en réalité qu'une fausse alarme et le contacteur 133 est alors placé, au cours d'une étape 250, à l'état fermé.

Par ailleurs, le temps d'ouverture décidé est avantageusement inférieur au temps de transparence de l'équipement. Par exemple, pour un équipement destiné à l'aéronautique dont le temps de transparence minimal est de 50ms, le temps d'ouverture décidé peut être fixé à 40ms.

Par conséquent, dans le cas d'une fausse alarme, une interruption intempestive de l'équipement électrique 120 est évitée. En effet, du point de vue de l'équipement électrique 120, si le courant électrique est rétabli avant la fin du temps de transparence, le courant électrique n'a jamais été interrompu.

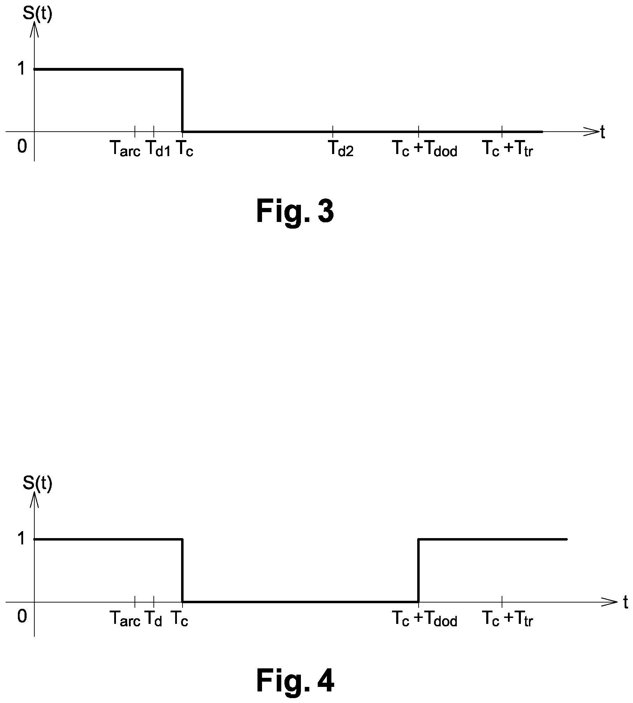

Les deux exemples qui suivent, correspondant aux figures 3 et 4, vont maintenant décrire un mode de réalisation préférentiel de l'invention, dans lequel le défaut électrique est un défaut d'arc. Le défaut d'arc génère un signal du premier type et un signal du deuxième type, qui sont respectivement un signal électrique et un signal acoustique.

La figure 3 est un chronogramme représentant l'état S du contacteur 133 du dispositif de protection 130 au cours du temps, lorsque qu'un défaut d'arc s'est effectivement produit au sein du réseau électrique 100. En fonctionnement nominal, le contacteur 133 est à l'état fermé, représenté par un état haut de valeur 1 sur le chronogramme de la figure 3, et l'équipement électrique 120 est alimenté.

Le défaut d'arc se produit à un instant T_{arc} et entraîne les apparitions simultanées d'un signal électrique et d'un signal acoustique. Le signal électrique arrive au premier détecteur 131 à un instant T_{d1}. Le contacteur 133 est alors placé à l'état ouvert, représenté par un état bas de valeur 0 sur le chronogramme de la figure 3, à un instant T_{c}.

Ensuite, le signal acoustique arrive au deuxième détecteur 132 à un instant T_{d2} avant la fin du temps d'ouverture décidé T_{dod}, c'est-à-dire avant un instant T_{c} + T_{dod}, venant ainsi confirmer l'apparition du défaut d'arc. Le contacteur 133 est donc maintenu à l'état ouvert.

Par conséquent, après que le temps de transparence Tₜᵣ de l'équipement électrique 120 est écoulé, c'est-à-dire à un instant postérieur à un instant T_{c} + Tₜᵣ, l'équipement électrique 120 s'éteint.

La figure 4 est un chronogramme représentant l'état S du contacteur 133 du dispositif de protection 130 au cours du temps, lorsqu'une perturbation électrique, autre qu'un défaut d'arc, s'est produite au sein du réseau électrique 100, déclenchant ainsi une fausse alarme. Comme dans l'exemple précédent, en fonctionnement nominal, le contacteur 133 est à l'état fermé et l'équipement électrique 120 est alimenté.

La perturbation électrique se produit à un instant T_{arc} et entraîne l'apparition d'un signal électrique ayant une signature similaire à celle d'un signal électrique provoqué par un défaut d'arc. Le signal électrique provoqué par la perturbation électrique arrive au premier détecteur 131 à un instant T_{d}. Le contacteur 133 est alors placé à l'état ouvert à un instant T_{c}.

Ensuite, à la fin du temps d'ouverture décidé T_{dod}, c'est-à-dire à un instant T_{c} + T_{dod}, aucun signal acoustique n'ayant été détecté par le deuxième détecteur 132, le contacteur 133 est placé à l'état fermé.

Par conséquent, après que le temps de transparence Tₜᵣ de l'équipement électrique 120 est écoulé, c'est-à-dire à un instant postérieur à un instant T_{c} + Tₜᵣ, l'équipement électrique 120 est toujours alimenté et de son point de vue, il ne s'est rien passé.

Ainsi, grâce à l'invention, on couple deux moyens de détection différents, l'un ayant un temps de réponse faible afin de protéger le réseau électrique 100 très rapidement lors de la détection d'un défaut électrique, et l'autre ayant un temps de réponse plus élevé pour confirmer le défaut électrique, augmentant ainsi la fiabilité.

Naturellement l'invention n'est pas limitée aux modes de réalisation décrits en référence aux figures et des variantes pourraient être envisagées sans sortir du cadre de l'invention.

## Revendications

1. Procédé de protection d'un réseau électrique (100) contre un défaut électrique, le défaut électrique générant un premier type de signal et un deuxième type de signal différent du premier type de signal, le réseau électrique (100) comportant une alimentation électrique (110) et un équipement électrique (120) entre lesquels est disposé un contacteur (133), le contacteur (133) pouvant être placé dans deux états :
- un état ouvert (0), pour lequel l'alimentation électrique (110) n'est pas connectée électriquement à l'équipement électrique (120) ;
- un état fermé (1), pour lequel l'alimentation électrique (110) est connectée électriquement à l'équipement électrique (120) ;
le procédé étant **caractérisé en ce qu'**il comporte les étapes suivantes :
- détecter (210) un signal du premier type ;
- placer (220) le contacteur dans l'état ouvert (0) ;
- vérifier (230), au cours d'une durée prédéterminée appelée « temps d'ouverture décidé (T_{dod}) », si un signal du deuxième type apparaît ;
- si un signal du deuxième type apparaît pendant le temps d'ouverture décidé (T_{dod}), maintenir (240) le contacteur dans l'état ouvert (0) ;
- si aucun signal du deuxième type n'apparaît au cours du temps d'ouverture décidé (T_{dod}), placer (250) le contacteur dans l'état fermé (1).

2. Procédé selon la revendication précédente dans lequel le réseau électrique (100) comporte en outre des moyens de détection d'un signal du deuxième type et dans lequel le temps d'ouverture décidé (T_{dod}) est supérieur au temps nécessaire à un signal du deuxième type pour se propager jusqu'aux moyens de détection d'un signal du deuxième type.

3. Procédé selon l'une quelconque des revendications précédentes dans lequel le temps d'ouverture décidé (T_{dod}) est inférieur au temps de transparence (Tₜᵣ) de l'équipement électrique (120).

4. Procédé selon l'une quelconque des revendications précédentes comportant en outre une étape de corrélation temporelle entre l'instant où le contacteur (133) est placé à l'état ouvert (0) et l'instant où un signal du deuxième type est détecté.

5. Procédé selon l'une quelconque des revendications précédentes dans lequel les signaux du premier type de signal sont des signaux électriques.

6. Procédé selon l'une quelconque des revendications précédentes dans lequel les signaux du deuxième type de signal sont des signaux acoustiques.

7. Dispositif de protection (130) d'un réseau électrique (100) contre un défaut électrique, le défaut électrique générant un premier type de signal et un deuxième type de signal différent du premier type de signal, le réseau électrique (100) comportant une alimentation électrique (110) et un équipement électrique (120), le dispositif (130) étant **caractérisé en ce qu'**il comporte :
- un premier détecteur (131) apte à détecter un signal du premier type ;
- un deuxième détecteur (132) apte à détecter un signal du deuxième type ;
- un contacteur (133) pouvant être placé dans deux états, un état ouvert (0) pour lequel l'alimentation électrique (110) n'est pas connectée électriquement à l'équipement électrique (120), et un état fermé (1) pour lequel l'alimentation électrique (110) est connectée électriquement à l'équipement électrique (120) ;
- des moyens de pilotage agencés pour piloter le contacteur (133), les moyens de pilotage étant agencés pour :
∘ placer le contacteur (133) dans l'état ouvert (0) si le premier détecteur (131) détecte un signal d'un premier type ;
∘ maintenir le contacteur (133) dans l'état ouvert (0) si le deuxième détecteur (132) détecte un signal du deuxième type pendant le temps d'ouverture décidé (T_{dod});
∘ placer le contacteur (133) dans l'état fermé (1) si aucun signal du deuxième type n'est détecté par le deuxième détecteur (132) pendant le temps d'ouverture décidé (T_{dod}).

8. Dispositif de protection (130) selon la revendication 7 dans lequel le contacteur (133) est un contacteur statique à semi-conducteurs.

9. Réseau électrique (100) comportant un dispositif de protection (130) selon l'une quelconque des revendications 7 et 8.

## Patentansprüche

1. Schutzverfahren eines Stromnetzes (100) vor einem elektrischen Defekt, wobei der elektrische Defekt einen ersten Signaltyp und einen vom ersten Signaltyp unterschiedlichen zweiten Signaltyp generiert, wobei das Stromnetz (100) eine Stromversorgung (110) und eine elektrische Ausrüstung (120) umfasst, zwischen denen ein Netzschütz (133) angeordnet ist, wobei der Netzschütz (133) in zwei Zuständen platziert sein kann:
- einem offenen Zustand (0), für den die Stromversorgung (110) nicht an die elektrische Ausrüstung (120) elektrisch angeschlossen ist;
- einen geschlossenen Zustand (1), für den die Stromversorgung (110) elektrisch an die elektrische Ausrüstung (120) angeschlossen ist;
wobei das Verfahren **dadurch gekennzeichnet ist, dass** es die folgenden Schritte umfasst:
- detektieren (210) eines Signals des ersten Typs;
- platzieren (220) des Netzschützes in den offenen Zustand (0);
- überprüfen (230) im Verlauf einer vorbestimmten, als "beschlossene Öffnungszeit (T_{dod})" genannte Dauer, ob ein Signal des zweiten Typs erscheint;
- wenn ein Signal des zweiten Typs während der beschlossenen Öffnungszeit erscheint (T_{dod}), beibehalten (240) des Netzschützes im offenen Zustand (0);
- wenn im Verlauf der beschlossenen Öffnungszeit (T_{dod}) kein Signal des zweiten Typs erscheint, platzieren (250) des Netzschützes in den geschlossen Zustand (1).

2. Verfahren gemäß dem voranstehenden Anspruch, bei dem das Stromnetz (1000) darüber hinaus Detektionsmittel eines Signals des zweiten Typs umfasst und bei dem die beschlossene Öffnungszeit (T_{dod}) größer ist als die Zeit, die für ein Signal des zweiten Typs notwendig ist, um sich bis zu den Detektionsmitteln eines Signals des zweiten Typs zu verbreiten.

3. Verfahren gemäß irgendeinem der voranstehenden Ansprüche, bei dem die beschlossene Öffnungszeit (T_{dod}) geringer ist als die Transparenzzeit (Tₜᵣ) der elektrischen Ausrüstung (120).

4. Verfahren gemäß irgendeinem der voranstehenden Ansprüche, umfassend darüber hinaus einen zeitlichen Korrelationsschritt zwischen dem Augenblick, in dem der Netzschütz (133) in den offenen Zustand (0) platziert wird, und dem Augenblick, in dem ein Signal des zweiten Typs detektiert wird.

5. Verfahren gemäß irgendeinem der voranstehenden Ansprüche, bei dem die Signale des ersten Signaltyps keine elektrischen Signale sind.

6. Verfahren gemäß irgendeinem der voranstehenden Ansprüche, bei dem die Signale des zweiten Signaltyps akustische Signale sind.

7. Schutzverfahren (130) eines Stromnetzes (100) vor einem elektrischen Defekt, wobei der elektrische Defekt einen ersten Signaltyp und einen vom ersten Signaltyp unterschiedlichen zweiten Signaltyp generiert, wobei das Stromnetz (100) eine Stromversorgung (110) und eine elektrische Ausrüstung (120) umfasst, wobei die Vorrichtung (130) **dadurch gekennzeichnet ist, dass** sie umfasst:
- einen ersten Netzschütz (131), der zur Detektion eines Signals des ersten Typs geeignet ist;
- einen zweiten Netzschütz (132), der zur Detektion eines Signals des zweiten Typs geeignet ist;
- einen Netzschütz (133), der in zwei Zustände platziert werden kann, einen offenen Zustand (0), für den die Stromversorgung (110) elektrisch nicht an die Stromversorgung (120) angeschlossen ist, und einen geschlossenen Zustand (1), für den die Stromversorgung (110) elektrisch an die Stromversorgung (120) angeschlossen ist;
- Steuermittel, die angeordnet sind, um den Netzschütz (133) zu steuern, wobei die Steuermittel angeordnet sind, um
∘ den Netzschütz (133) in den offenen Zustand (0) zu platzieren, wenn der erste Netzschütz (131) ein Signal eines ersten Typs detektiert;
∘ den Netzschütz (133) in dem offenen Zustand (0) zu halten, wenn der zweite Netzschütz (132) während der beschlossenen Öffnung (T_{dod}) ein Signal des zweiten Typs detektiert;
∘ den Netzschütz (133) in den geschlossenen Zustand (1) zu platzieren, wenn während der beschlossenen Öffnungszeit (T_{dod}) kein Signal des zweiten Typs vom zweiten Netzschütz (132) detektiert wird.

8. Schutzvorrichtung (130) gemäß Anspruch 7, bei der der Netzschütz (133) ein statischer Netzschütz mit Halbleitern ist.

9. Stromnetz (100), umfassend eine Schutzvorrichtung (130) gemäß irgendeinem der Ansprüche 7 und 8.

## Claims

1. Method for protecting a power grid (100) from an electrical fault, the electrical fault generating a first signal type and a second signal type that is different from the first signal type, the power grid (100) comprising an electrical power supply (110) and an electrical device (120) between which a contactor (133) is arranged, the contactor (133) being able to be placed in two states:
- an open state (0), for which the electrical power supply (110) is not electrically connected to the electrical device (120);
- a closed state (1), for which the electrical power supply (110) is electrically connected to the electrical device (120);
the method being **characterised in that** it comprises the following steps:
- detecting (210) a signal of the first type;
- placing (220) the contactor in the open state (0);
- verifying (230), during a predetermined time period referred to as "decided opening time (T_{dod})", whether a signal of the second type appears;
- if a signal of the second type appears during the decided opening time (T_{dod}), keeping (240) the contactor in the open state (0);
- if no signal of the second type appears during the decided opening time (T_{dod}), placing (250) the contactor in the closed state (1).

2. Method as claimed in the preceding claim wherein the power grid (100) further comprises means for detecting a signal of the second type and wherein the decided opening time (T_{dod}) is greater than the time required for a signal of the second type to propagate to the means for detecting a signal of the second type.

3. Method as claimed in any preceding claim wherein the decided opening time (T_{dod}) is less than the transparency time (Tₜᵣ) of the electrical device (120).

4. Method as claimed in any preceding claim comprising furthermore a step of time correlation between the instant when the contactor (133) is placed in the open state (0) and the instant when a signal of the second type is detected.

5. Method as claimed in any preceding claim wherein the signals of the first type of signal are electrical signals.

6. Method as claimed in any preceding claim wherein the signals of the second type of signal are acoustic signals.

7. Device for protecting (130) a power grid (100) from an electrical fault, the electrical fault generating a first signal type and a second signal type that is different from the first signal type, the power grid (100) comprising an electrical power supply (110) and an electrical device (120), the device (130) being **characterised in that** it comprises:
- a first detector (131) able to detect a signal of the first type;
- a second detector (132) able to detect a signal of the second type;
- a contactor (133) that can be placed in two states, an open state (0) for which the electrical power supply (110) is not electrically connected to the electrical device (120), and a closed state (1) for which the electrical power supply (110) is electrically connected to the electrical device (120);
- means for controlling arranged to control the contactor (133), with the means for controlling being arranged to:
o place the contactor (133) in the open state (0) if the first detector (131) detects a signal of the first type;
o keep the contactor (133) in the open state (0) if the second detector (132) detects a signal of the second type during the decided opening time (Tdod);
o place the contactor (133) in the closed state (1) if no signal of the second type is detected by the second detector (132) during the decided opening time (T_{dod}).

8. Device for protecting (130) according to claim 7 wherein the contactor (133) is a static semi-conductor contactor.

9. Power grid (100) comprising a device for protecting (130) according to any of claims 7 and 8.
